(19) Europäisches Patentamt
European Patent Office
Office européen des brevets

(11) Veröffentlichungsnummer : **0 041 474**
**B1**

(12) **EUROPÄISCHE PATENTSCHRIFT**

(45) Veröffentlichungstag der Patentschrift : **16.11.83**

(51) Int. Cl.³ : **C 07 F 9/24**, C 09 B 29/06

(21) Anmeldenummer : **81810153.7**

(22) Anmeldetag : **24.04.81**

(54) **N-Phenylphosphoramidsäurediester, Verfahren zu ihrer Herstellung und ihre Verwendung als Kupplungskomponenten zur Herstellung von Azofarbstoffen.**

(30) Priorität : **30.04.80 CH 3340/80**

(43) Veröffentlichungstag der Anmeldung : **09.12.81 Patentblatt 81/49**

(45) Bekanntmachung des Hinweises auf die Patenterteilung : **16.11.83 Patentblatt 83/46**

(84) Benannte Vertragsstaaten : **BE CH DE FR GB IT LI**

(56) Entgegenhaltungen :

**JOURNAL OF THE CHEMICAL SOCIETY, Band 1963, London P.J. BUNYAN et al. « The Reactivity of Organophosphorus Compounds. Part XIV. Deoxygenation of Aromatic C-Nitroso-compounds by Triethyl Phosphite and Tripenylphosphine : a New Cyclisation Reaction » Seiten 42 bis 49**

**COLLECTION OF CZECHOSLOVAK CHEMICAL COMMUNICATIONS, Band 41, Nr. 11, 1976, Prag J. MOLLIN et al. « Mechanism of Alkali-Catalyzed Hydrolysis of Diphenyl Amidophosphates » Seiten 3245 bis 3255**

**Chemical Abstracts, Vol. 44, 1950, Spalte 3878d**

**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Patentabteilung Postfach**
**CH-4002 Basel (CH)**

(72) Erfinder : **Lenoir, John, Dr.**
**Avenue Général Guisan 34**
**CH-1700 Fribourg (CH)**
Erfinder : **Jan, Gérald, Dr.**
**Rte. de la Poudrière 33**
**CH-1700 Fribourg (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 041 474 B1

Jouve, 18, rue St-Denis, 75001 Paris, France

N-Phenylphosphoramidsäurediester, Verfahren zu ihrer Herstellung und ihre Verwendung als Kupplungskomponenten zur Herstellung von Azofarbstoffen

Die vorliegende Erfindung betrifft neue organische Verbindungen, Verfahren zu deren Herstellung sowie die Verwendung dieser Verbindungen als Kupplungskomponenten zur Herstellung von Azofarbstoffen.

Aufgabe der vorliegenden Erfindung ist es, neue Kupplungskomponenten zur Herstellung von Azofarbstoffen bereitzustellen. Es wurde gefunden, dass gewisse N-Phenylphosphoramidsäurediester dazu besonders geeignet sind.

Gegenstand der vorliegenden Erfindung sind N-Phenylphosphoramidsäurediester der Formel

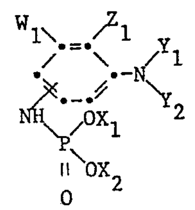

worin

$X_1$ und $X_2$ unabhängig voneinander gegebenenfalls substituiertes Alkyl mit 1 bis 24 Kohlenstoffatomen, Alkenyl mit 2 bis 4 Kohlenstoffatomen, gegebenenfalls substituiertes Cycloalkyl mit 5 oder 6 Kohlenstoffatomen, gegebenenfalls substituiertes Aralkyl mit 1 bis 4 Kohlenstoffatomen im Alkylteil oder gegebenenfalls substituiertes Aryl sind,

$Y_1$ Wasserstoff oder gegebenenfalls substituiertes Alkyl mit 1 bis 8 Kohlenstoffatomen,

$Y_2$ gegebenenfalls substituiertes Alkyl mit 1 bis 8 Kohlenstoffatomen, Alkenyl mit 2 bis 4 Kohlenstoffatomen, gegebenenfalls substituiertes Aralkyl mit 1 bis 4 Kohlenstoffatomen im Alkylteil oder gegebenenfalls substituiertes Aryl ist oder zusammen mit $Y_1$ die zur Vervollständigung eines Pyrrolidin-, Piperidin-, Piperazin- oder Morpholinringes notwendigen Atome darstellt, wobei diese Ringe gegebenenfalls mit Acyloxy oder Carbalkoxy mit je 2 bis 5 Kohlenstoffatomen substituiert sind,

$Z_1$ Wasserstoff, gegebenenfalls substituiertes Alkyl mit 1 bis 4 Kohlenstoffatomen, Alkenyl mit 2 bis 4 Kohlenstoffatomen, gegebenenfalls substituiertes Alkoxy mit 1 bis 5 Kohlenstoffatomen, gegebenenfalls substituiertes Aryl oder Aryloxy, gegebenenfalls substituiertes Alkylthio mit 1 bis 5 Kohlenstoffatomen, gegebenenfalls substituiertes Arylthio, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist,

$W_1$ Wasserstoff, Alkyl oder Alkoxy mit je 1 bis 4 Kohlenstoffatomen, Acyl mit 2 bis 3 Kohlenstoffatomen oder zusammen mit $Z_1$ die zur Vervollständigung eines gegebenenfalls substituierten, ankondensierten Benzolringes notwendigen Atome bedeutet, der gegebenenfalls mit Hydroxyl, Halogen, Cyano, Nitro oder Carboxyl substituiert ist; ausgenommen sind die bereits bekannten Verbindungen Diäthyl-, Diphenyl- und Dibenzyl-N-(p-dimethylaminophenyl)-amidophosphat.

Ein weiterer Gegenstand der Erfindung betrifft ein Verfahren zur Herstellung der N-Phenylphosphoramidsäurediester. Durch das erfindungsgemässe Verfahren wird das Produkt der Formel (1) in ausgezeichneter Ausbeute und Reinheit zugänglich.

Gegenstand der Erfindung ist ferner die Verwendung der N-Phenylphosphoramidsäurediester als Kupplungskomponente zur Herstellung von Azofarbstoffen. Diese Azofarbstoffe sind z. B. als Bildfarbstoffe in photographischen Materialien oder zum Färben von Textilmaterialien geeignet.

Die Substituenten $X_1$ und $X_2$ in Formel (1), die Bestandteil der Estergruppen sind, können unabhängig voneinander Alkyl mit 1 bis 24 Kohlenstoffatomen, insbesondere mit 1 bis 20 Kohlenstoffatomen sein, wobei die Alkylreste geradkettig oder verzweigt sein können, wie z. B. Methyl, Aethyl, Propyl, i-Propyl, Butyl, i-Butyl, tert.-Butyl, Amyl, tert.-Amyl (1,1-Dimethylpropyl), 1,1,3,3-Tetramethylbutyl, 1-Methyläthylpentyl, Hexyl, 1-Methylpentyl, Neopentyl, 1-, 2- oder 3-Methylhexyl, Heptyl, n-Octyl, tert.-Octyl, 2-Aethylhexyl, n-Nonyl, Isononyl, tert.-Nonyl, Decyl, tert.-Decyl, Undecyl; ferner Dodecyl, Tetradecyl, Hexadecyl, Octadecyl, Nonadecyl oder Eicosyl sowie die dazugehörenden Isomeren.

Die Alkylreste können substituiert sein mit Halogen, wie z. B. Fluor oder Chlor, Alkoxy mit 1 bis 4 Kohlenstoffatomen.

Weiter bedeuten $X_1$ und $X_2$ unabhängig voneinander Alkenyl mit 2 bis 4 Kohlenstoffatomen oder Cycloalkyl mit 5 oder 6 Kohlenstoffatomen, welches gegebenenfalls mit Methyl oder Aethyl weiter substituiert ist. Sind die Substituenten $X_1$ und $X_2$ unabhängig voneinander gegebenenfalls substituiertes Aralkyl mit 1 bis 4 Kohlenstoffatomen im Alkylteil oder gegebenenfalls substituiertes Aryl, so sind Benzyl und Phenyl besonders geeignete Gruppen, welche mit Halogen, wie Chlor oder Brom, Hydroxyl, Cyano, Nitro oder Carboxyl substituiert sein können.

Für den Substituenten $Y_1$ kommen Wasserstoff oder Alkyl mit 1 bis 8 Kohlenstoffatomen, insbesondere mit 1 bis 5 Kohlenstoffatomen, infrage. Die Alkylreste können sowohl geradkettig als auch verzweigt sein. Sie können z. B. Methyl, Aethyl, Propyl, i-Propyl, Butyl, i-Butyl, tert.-Butyl, Amyl oder tert.-

Amyl (1,1-Dimethylpropyl) darstellen. Geeignete Substituenten für diese Reste sind Alkoxy mit 1 bis 4 Kohlenstoffatomen, Cyano oder Hydroxyl. Der zu $Y_1$ in geminaler Position stehende Substituent $Y_2$ bedeutet Alkyl mit 1 bis 8 Kohlenstoffatomen, vorzugsweise mit 1 bis 6 Kohlenstoffatomen. Die Alkylreste $Y_2$ können die gleichen sein wie sie bereits für $Y_1$ angegeben sind ; u. a. sind auch Hexyl, 1-Methylpentyl oder Neopentyl möglich, sowie 1-, 2- oder 3-Methylhexyl, Heptyl, n-Octyl, tert.-Octyl oder 2-Aethylhexyl. Als Substituenten für die Alkylreste sind Carbalkoxy oder Acyloxy mit je 2 bis 5 Kohlenstoffatomen oder Alkoxy mit 1 bis 4 Kohlenstoffatomen, vorzugsweise mit 1 oder 2 Kohlenstoffatomen, geeignet.

Weitere Substituenten können Hydroxyl oder Cyano sein. $Y_2$ kann auch die Bedeutung von Alkenyl mit 2 bis 4 Kohlenstoffatomen haben. Ist der Substituent $Y_2$ gegebenenfalls substituiertes Aralkyl mit 1 bis 4 Kohlenstoffatomen im Alkylteil oder Aryl, so ist er insbesondere Benzyl oder Phenyl. Diese Reste können z. B. mit Halogen, wie Chlor oder Brom, Hydroxyl, Cyano, Nitro oder Carboxyl substituiert sein.

Beide Substituenten $Y_1$ und $Y_2$ können zusammen mit dem Stickstoffatom, an das sie gebunden sind, folgende 5- oder 6-gliedrigen Ringe bilden.

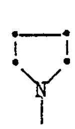
,
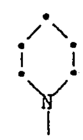

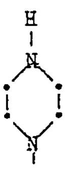
,
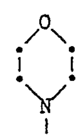

Besonders geeignet ist der Pyrrolidinrest. Substituenten solcher Reste sind z. B. Acyloxy und Carbalkoxy mit je 2 bis 5 Kohlenstoffatomen, insbesondere mit 2 oder 3 Kohlenstoffatomen, wobei der Carbalkoxyrest besonders bevorzugt ist.

Der Substituent $Z_1$ ist Wasserstoff oder Alkyl mit 1 bis 4 Kohlenstoffatomen. Mögliche Alkylreste sind solche wie sie bereits für $Y_1$ angegeben sind. Der Methylgruppe kommt dabei besondere Bedeutung zu. Weitere Substituenten $Z_1$ sind : Alkenyl mit 2 bis 4 Kohlenstoffatomen oder Alkoxy mit 1 bis 5 Kohlenstoffatomen, insbesondere mit 1 oder 2 Kohlenstoffatomen. Diese können mit Hydroxyl, Alkoxy wie z. B. Methoxy oder Aethoxy, Halogen, wie Chlor oder Brom, Cyano oder Nitro substituiert sein.

Ist der Substituent $Z_1$ gegebenenfalls substituiertes Aryl oder Aryloxy, so ist er vorzugsweise Phenyl oder Phenoxy, wobei diese mit den gleichen Substituenten substituiert sein können, wie sie als Substituenten für Aryl oder Aralkyl für den Rest $X_1$ bzw. $X_2$ genannt sind. Weitere Substituenten $Z_1$ sind Alkylthio mit 1 bis 5 Kohlenstoffatomen, die mit Hydroxyl oder Halogen weiter substituiert sein können.

Ist $Z_1$ Arylthio, so kommt bevorzugt Phenylthio infrage, welches mit Hydroxyl, Halogen, wie z. B. Chlor oder Brom, Cyano oder Nitro substituiert sein kann. Ist $Z_1$ Halogen, z. B. Fluor, Chlor oder Brom, so ist Chlor bevorzugt. Bedeutet $Z_1$ Carbalkoxy, so befinden sich 1 bis 4 Kohlenstoffatome im Alkoxyteil. Ein besonders geeigneter Substituent ist Carbmethoxy. Weiterhin bedeutet $Z_1$ diejenigen Atome, die zusammen mit $Y_1$ Piperidin- oder Morpholinreste bilden, welche Methylgruppen als Substituenten tragen können.

Der Substituent $W_1$ ist Wasserstoff, Alkyl oder Alkoxy mit je 1 bis 4 Kohlenstoffatomen sowie Acyl mit 2 oder 3 Kohlenstoffatomen. Von diesen ist besonders Wasserstoff geeignet. Zusammen mit $Z_1$ kann $W_1$ einen ankondensierten Benzolring bilden. Er kann mit Hydroxyl, Halogen, wie Chlor oder Brom, Cyano, Nitro oder Carboxyl substituiert sein.

Unter Acyl und Acyloxy sind Reste der Formeln $R-\overset{\overset{O}{\|}}{C}-$ und $R-\overset{\overset{O}{\|}}{C}-O-$ zu verstehen, worin R Alkyl oder Aryl bedeutet.

Wertvolle Verbindungen der Formel (1) sind nun solche der Formel

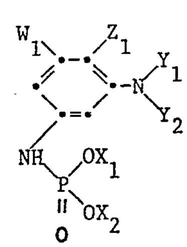

(2)

worin $X_1$, $X_2$, $Y_1$, $Y_2$, $Z_1$ und $W_1$ die oben angegebenen Bedeutungen haben.

Bevorzugt sind nun solche Verbindungen, die der Formel

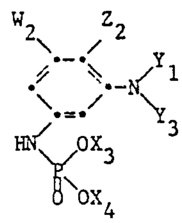

(3)

entsprechen, worin

$X_3$ und $X_4$ unabhängig voneinander gegebenenfalls substituiertes Alkyl mit 1 bis 24 Kohlenstoffatomen, Alkenyl mit 2 bis 4 Kohlenstoffatomen, Cycloalkyl mit 5 oder 6 Kohlenstoffatomen, gegebenenfalls substituiertes Benzyl oder gegebenenfalls substituiertes Phenyl sind,

$Y_3$ gegebenenfalls substituiertes Alkyl mit 1 bis 6 Kohlenstoffatomen, Alkenyl mit 2 bis 4 Kohlenstoffatomen, gegebenenfalls substituiertes Benzyl oder gegebenenfalls substituiertes Phenyl ist oder zusammen mit $Y_1$ die zur Vervollständigung eines Pyrrolidin-, Piperidin-, Piperazin- oder Morpholinringes notwendigen Atome darstellt, wobei diese Ringe gegebenenfalls mit Acyloxy oder Carbalkoxy mit je 2 bis 5 Kohlenstoffatomen substituiert sind,

$Z_2$ Wasserstoff, gegebenenfalls substituiertes Alkyl mit 1 bis 4 Kohlenstoffatomen, Alkenyl mit 2 bis 4 Kohlenstoffatomen, gegebenenfalls substituiertes Alkoxy mit 1 bis 5 Kohlenstoffatomen, gegebenenfalls substituiertes Phenyl oder Phenoxy, gegebenenfalls substituiertes Alkylthio mit 1 bis 5 Kohlenstoffatomen, gegebenenfalls substituiertes Phenylthio, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist,

$W_2$ Wasserstoff, Alkyl oder Alkoxy mit je 1 bis 4 Kohlenstoffatomen, Acyl mit 2 oder 3 Kohlenstoffatomen oder zusammen mit $Z_2$ die zur Vervollständigung eines ankondensierten Benzolringes notwendigen Atome bedeutet, und der gegebenenfalls mit Hydroxyl, Halogen, Cyano, Nitro oder Carboxyl substituiert ist, und

$Y_1$ die oben angegebene Bedeutung hat.

Geeignete Verbindungen der Formel (3) sind die Verbindungen der Formel

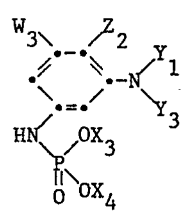

(4)

worin

$W_3$ Wasserstoff oder zusammen mit $Z_2$ die zur Vervollständigung eines ankondensierten Benzolringes notwendigen Atome bedeutet, der gegebenenfalls mit Hydroxyl, Halogen, Cyano, Nitro oder Carboxyl substituiert ist, und

$X_3$, $X_4$, $Y_1$, $Y_3$ und $Z_2$ die oben angegebene Bedeutung haben.

Bevorzugt sind ferner auch Verbindungen der Formel

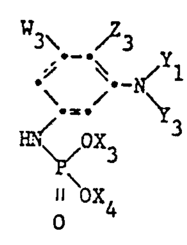

(5)

worin

$Z_3$ Wasserstoff, gegebenenfalls substituiertes Alkyl mit 1 bis 4 Kohlenstoffatomen, gegebenenfalls substituiertes Alkoxy mit 1 bis 5 Kohlenstoffatomen, gegebenenfalls substituiertes Alkylthio mit 1 bis 5 Kohlenstoffatomen, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist, und

$X_3$, $X_4$, $Y_1$, $Y_3$ und $W_3$ die oben angegebene Bedeutung haben.

Von Interesse sind auch Verbindungen der Formel

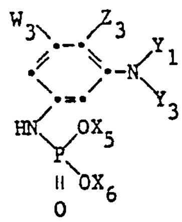

(6)

worin

$X_5$ und $X_6$ unabhängig voneinander gegebenenfalls substituiertes Alkyl mit 1 bis 18 Kohlenstoffatomen, Cycloalkyl mit 5 oder 6 Kohlenstoffatomen, Benzyl oder Phenyl sind, und

$Y_1$, $Y_3$, $W_3$ und $Z_3$ die oben angegebene Bedeutung haben.

Besonders bevorzugte Verbindungen der Formel (6) sind Verbindungen der Formel

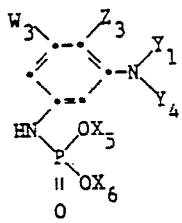

(7)

worin

$Y_4$ gegebenenfalls mit Carbalkoxy oder Acyloxy mit je 2 bis 5 Kohlenstoffatomen, Alkoxy mit 1 bis 4 Kohlenstoffatomen, Hydroxyl oder Cyano substituiertes Alkyl mit 1 bis 6 Kohlenstoffatomen, Benzyl oder Phenyl ist oder zusammen mit $Y_1$ die zur Vervollständigung eines gegebenenfalls mit Carbalkoxy mit 2 bis 5 Kohlenstoffatomen substituierten Pyrrolidinrings notwendigen Atome darstellt,

$X_5$, $X_6$, $Y_1$, $W_3$ und $Z_3$ die oben angegebene Bedeutung haben.

Von besonderem Interesse sind auch Verbindungen der Formel

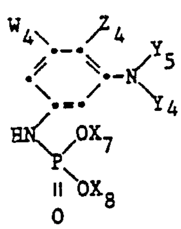

(8)

worin

$X_7$ und $X_8$ unabhängig voneinander gegebenenfalls mit Alkoxy mit 1 bis 4 Kohlenstoffatomen, Halogen oder Phenyl substituiertes Alkyl mit 1 bis 18 Kohlenstoffatomen, Cycloalkyl mit 5 oder 6 Kohlenstoffatomen, Benzyl oder Phenyl sind,

$Y_5$ Wasserstoff oder gegebenenfalls mit Hydroxyl, Cyano oder mit Alkoxy mit 1 bis 4 Kohlenstoffatomen substituiertes Alkyl mit 1 bis 5 Kohlenstoffatomen,

$W_4$ Wasserstoff oder zusammen mit $Z_4$ die zur Vervollständigung eines ankondensierten Benzolringes notwendigen Atome bedeutet,

$Z_4$ Wasserstoff, Alkyl mit 1 bis 4 Kohlenstoffatomen, gegebenenfalls substituiertes Alkoxy mit 1 bis 5 Kohlenstoffatomen, Halogen, Carbalkoxy mit 2 bis 5 Kohlenstoffatomen oder diejenigen Atome bedeutet,

die zusammen mit $Y_5$ einen Piperidin- oder Morpholinring bilden, der gegebenenfalls mit Methyl substituiert ist, und

$Y_4$ die oben angegebene Bedeutung hat.

Besonders geeignete Verbindungen der Formel (8) sind die Verbindungen der Formel

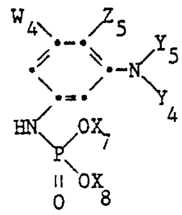

(9)

worin

$Z_5$ Wasserstoff, Methyl, Methoxy, Aethoxy, Methoxyaethoxy, Aethoxyaethoxy, Chlor oder diejenigen Atome bedeutet, um zusammen mit $Y_5$ ein mit Methyl substituiertes Piperidingerüst oder ein mit Methyl substituiertes Morpholingerüst zu bilden und

$X_7$, $X_8$, $Y_5$, $Y_4$ und $W_4$ die oben angegebene Bedeutung haben.

Ferner eignen sich Verbindungen der Formel

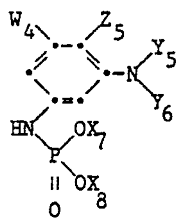

(10)

worin

$Y_6$ Phenyl, gegebenenfalls mit Methoxy, Carbmethoxy, Acyloxy mit 2 oder 3 Kohlenstoffatomen, Hydroxyl oder Cyano substituiertes Alkyl mit 1 bis 6 Kohlenstoffatomen oder Benzyl ist oder zusammen mit $Y_5$ die zur Vervollständigung eines gegebenenfalls mit Carbalkoxy mit 2 oder 3 Kohlenstoffatomen substituierten Pyrrolidinringes notwendigen Atome darstellt und

$X_7$, $X_8$, $Y_5$, $W_4$ und $Z_5$ die oben angegebene Bedeutung haben.

Von besonderem Interesse sind Verbindungen der Formel

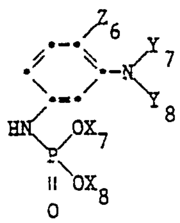

(11)

worin

$Y_7$ Wasserstoff oder Alkyl mit 1 bis 5 Kohlenstoffatomen,

$Y_8$ gegebenenfalls mit Methoxy oder Cyano substituiertes Alkyl mit 1 bis 6 Kohlenstoffatomen oder zusammen mit $Y_7$ die zur Vervollständigung eines gegebenenfalls mit Carbalkoxy mit 2 oder 3 Kohlenstoffatomen substituierten Pyrrolidinringes notwendigen Atome darstellt,

$Z_5$ Wasserstoff, Methyl, Methoxy, Methoxyaethoxy oder diejenigen Atome bedeutet, um zusammen mit $Y_7$ ein mit Methyl substituiertes Piperidingerüst oder ein mit Methyl substituiertes Morpholingerüst bilden, und

$X_7$ und $X_8$ die oben angegebene Bedeutung haben.

Besonders wertvolle Verbindungen der Formel (11) sind schliesslich Verbindungen der Formeln

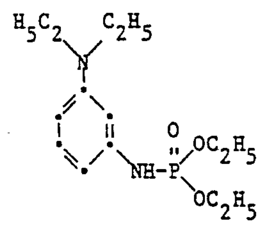

(12)

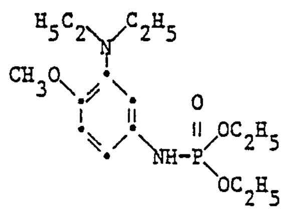

(13)

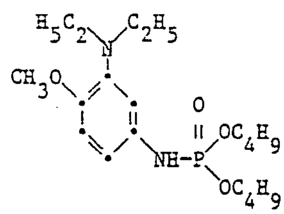

(14)

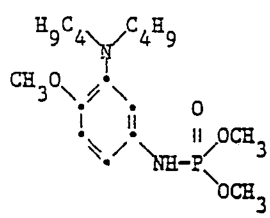

(15)

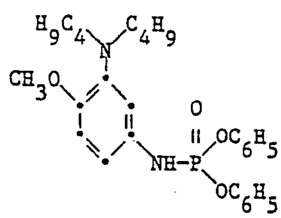

(16)

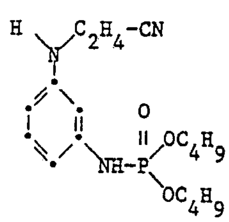

(17)

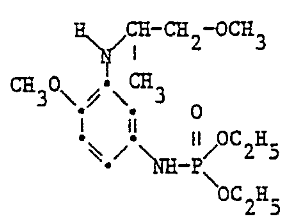

(18)

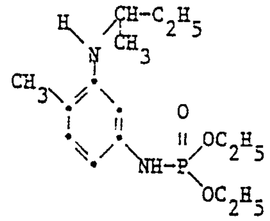

(19)

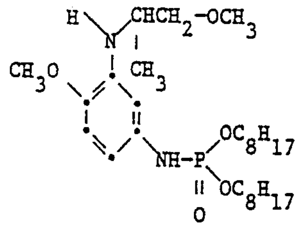

(20)

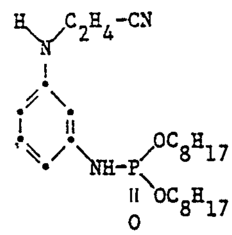

(21)

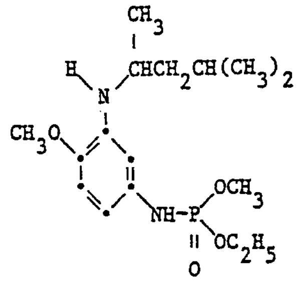

(22)

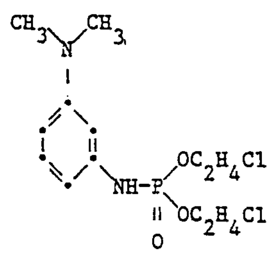

(23)

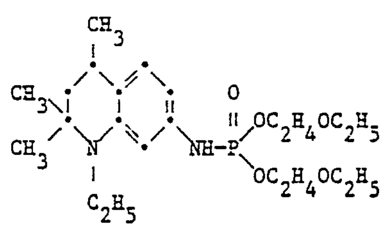

(24)

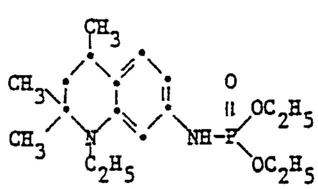

(25)

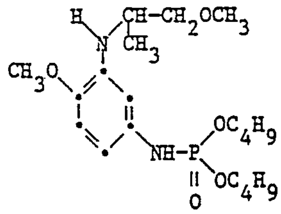

(26)

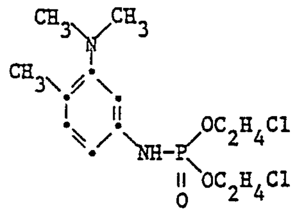

(27)

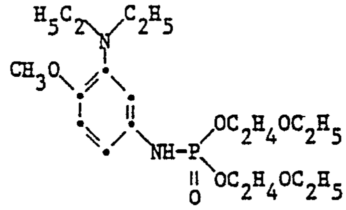

(28)

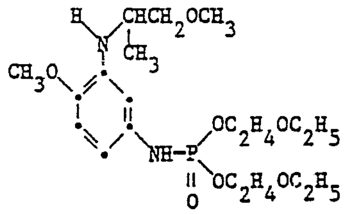

(29)

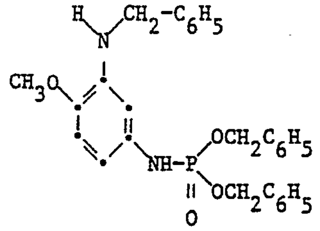

(30)

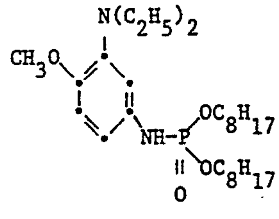

(31)

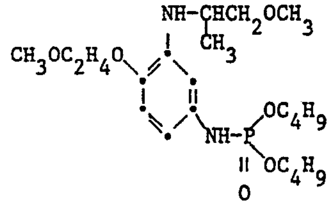

(32)

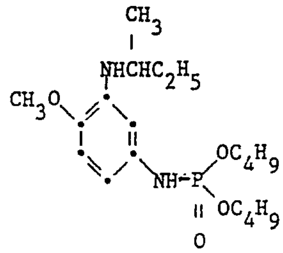

(33)

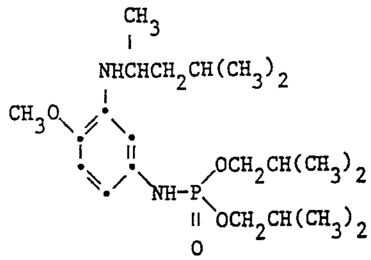

(34)

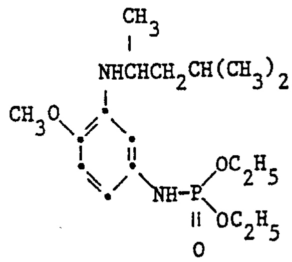

(35)

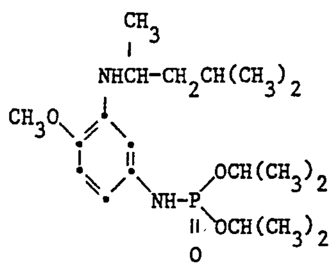

(36)

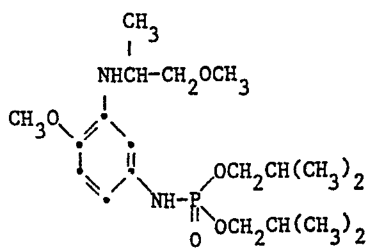

(37)

und

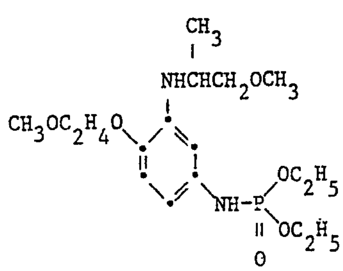

(38)

entsprechen.

Die Herstellung der Verbindungen der Formeln (1) bis (23) kann nach folgenden Reaktionsschemata erfolgen :

(A)

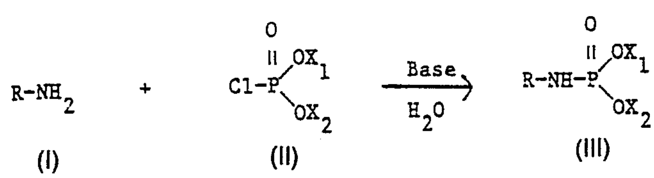


(I) (II) (III)

wobei R Aryl ist und $X_1$ und $X_2$ die oben angegebene Bedeutung haben. Verfahren (1), bei der die Komponenten (I) und (II) in wässrigem Medium in Gegenwart von Basen, z. B. primäre, sekundäre und tertiäre Amine, umgesetzt werden, ist von K. Sasse, Houben-Weyl « Methoden der Organischen Chemie » *12*/2, S. 419-440 beschrieben.

Ein weiteres Verfahren zur Herstellung von Verbindungen der Formel (III) arbeitet mit Phosphiten der Formel (IV) und halogenierten Kohlenwasserstoffen der Formel (V) :

(B) (I) + 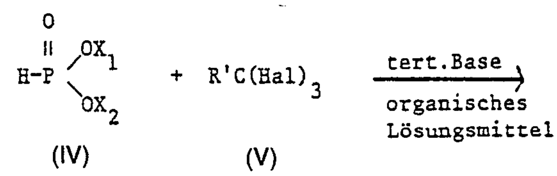

(III)

(IV) (V)

wobei R' z. B. Wasserstoff, Hal, —$CHHal_2$ oder —$CHal_3$, Hal Chlor, Brom oder Jod, die tert. Base Triäthylamin, N-Methylpiperidin oder Tris-[2-hydroxy-äthyl] amin ist und als organisches Lösungsmittel die polyhalogenierten Kohlenwasserstoffe dienen.

Auf Grund der Reaktionsträgheit der Aniline muss eine starke Base, wie z. B. Triäthylamin, eingesetzt werden. Im Gegensatz zum Verfahren (1) führt man die Umsetzung in den genannten organischen Lösungsmittel durch. Auch Verfahren (2) ist im oben angeführten Zitat beschrieben. Eine Modifizierung des Verfahrens (2), welche zu einer Verbesserung der Trennung der Reaktionsprodukte führt, schlägt die Verwendung eines wasserlöslichen tertiären Amins oder einer festen anorganischen Base, wie z. B. Natrium- oder Kaliumhydroxyd vor. (Vgl. Tung Tzeng-Shou, Chem. Abstr. *52*, 19903$^g$ (1958) und 3313$^g$ (1959)).

Ein besonders geeignetes Verfahren, bei welchem die erfindungsgemässen Verbindungen in hoher Ausbeute und grosser Reinheit zugänglich sind, ist von A. Zwierzak, Synthesis, 507 (1975) beschrieben. Gemäss diesem Verfahren, Verfahren (3), wird ein Anilin der Formel

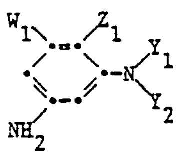 (VI)

worin die Substituenten $Y_1$, $Y_2$, $Z_1$ und $W_1$ die oben angegebene Bedeutung haben, in Gegenwart von Tetrachlorkohlenstoff, gegebenenfalls in Kombination mit weiteren organischen Lösungsmitteln, bei Temperaturen zwischen 0 und 100 °C, vorzugsweise zwischen 20 und 70 °C, in Gegenwart einer anorganischen Base, und eines Phasentransfer-Katalysators mit einem Phosphit der Formel

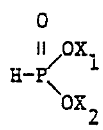 (IV)

worin die Substituenten $X_1$ und $X_2$ die oben angegebene Bedeutung haben, gegebenenfalls unter Schutzgasatmosphäre umgesetzt.

Als Aniline der Formel (VI) kommen z. B. die Verbindungen der folgenden Formeln infrage :

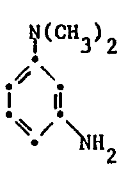 , 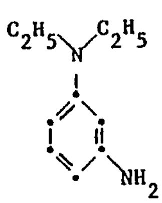 , 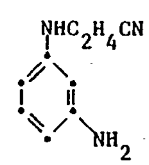 , 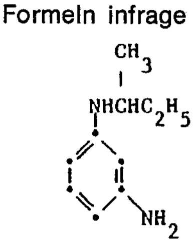 ,

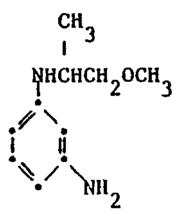 , 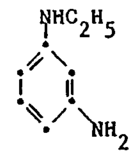 , 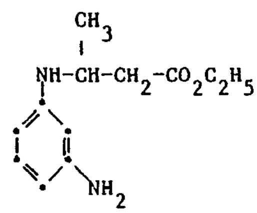 , 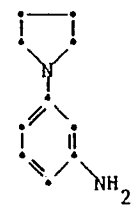 ,

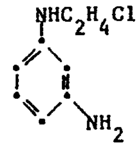, 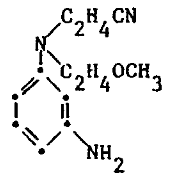, 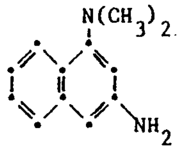, 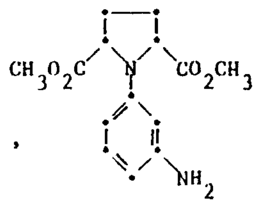,

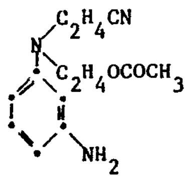, 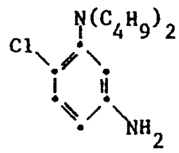, 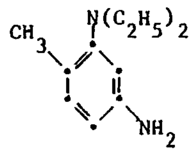, 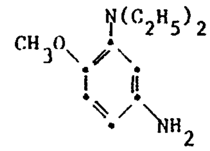,

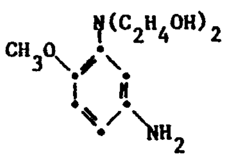, 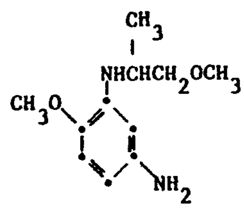, 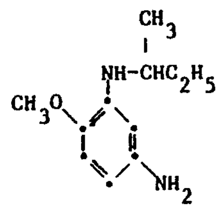, 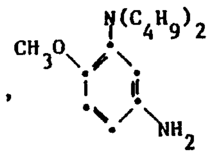

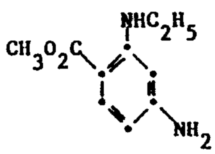, 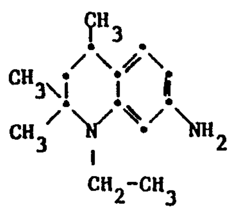, 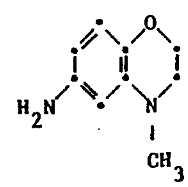, 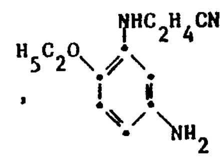

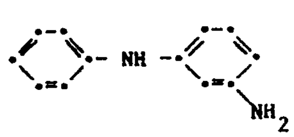, 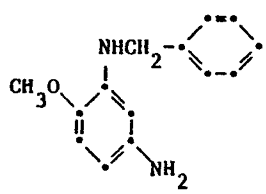 und 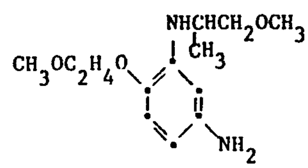

Geeignete Dialkylphosphite sind z. B. Dimethyl-, Diäthyl-, Dipropyl-, Diisopropyl-, Diallyl-, Dibutyl, oder Dioctyl-phosphit, Bis-2-Aethylexylphosphit, 2-Aethylhexyl-nonylphosphit, Bis(2-Aethoxyäthyl)phosphit, Aethyl-isopropylphosphit, 2,2'-Dichloräthylphosphit, Phenyldodecylphosphite, Phenyl-neopentylphosphit, Diphenylphosphit, Bis(2-isopropyl-5-methylphenyl)phosphit, Dibenzylphosphit, Aethyl-2-isopropyl-5-methylphenylphosphit oder Aethylmethylphosphit.

Bevorzugte weitere organische Lösungsmittel sind beispielsweise Methylenchlorid, Aethylenchlorid, Toluol, Chlorbenzol, Dichlorbenzol, Anisol, Dibutyläther oder Petroläther.

Geeignete anorganische Basen sind Kaliumhydroxyd, Calciumhydroxyd, Natriumcarbonat oder Kaliumcarbonat. Besonders geeignet ist Natriumhydroxyd. Als Phasentransfer-Katalysatoren bieten sich Kronenäther, z. B. 18-crown-6, quaternierte Ammoniumsalze, z. B. Benzyltributylammoniumchlorid, Benzyltributylammoniumbromid, Tetrabutylammoniumbromid, Tricaprylmethylammoniumchlorid und ferner quaternierte Phosphoniumsalze wie z. B. Benzyltriphenylphosphoniumbromid an.

Als Schutzgas wird z. B. Argon oder vorzugsweise Stickstoff verwendet. Das Verfahren (3) kann modifiziert werden, indem anstelle von Tetrachlorkohlenstoff andere Polyhalogenkohlenwasserstoffe einsetzbar sind, beispielsweise Trichlorbrommethan und 1,1,1-Trichloräthan. (Vgl. K. Sasse, Houben-Weyl « Methoden der organischen Chemie » 12/2 S. 432).

Die Verbindungen der Formel (1) stellen geeignete Kupplungskomponenten dar, die zusammen mit geeigneten Diazokomponenten nach üblichen Methoden zu wertvollen Azofarbstoffen gekuppelt werden können. Die erhaltenen Azofarbstoffe eignen sich z. B. als Bildfarbstoffe in photographischen Materialien, insbesondere auch im Silberfarbbleichmaterial.

## Beispiele

Die Herstellung der in den Beispielen 1 bis 5 genannten Verbindungen geschieht unter Schutzgasatmosphäre. Als Schutzgas wird Stickstoff verwendet.

### Beispiel 1

4,9 g 3-N,N-Diäthylamino-4-methoxyanilin werden in 50 ml Tetrachlorkohlenstoff gelöst. Nach Zugabe von 3,2 ml Diäthylphosphit und 0,5 g Benzyltributylammoniumbromid tropft man unter Rühren 2,5 ml 30 %-ige Natronlauge zu, wobei die Temperatur der Lösung auf 55 °C steigt. Bei dieser Temperatur rührt man 2 Stunden. Die abgekühlte Reaktionsmischung verdünnt man mit Wasser und trennt die organische Phase ab. Sie wird mit Wasser gewaschen und anschliessend von leichtflüchtigen Produkten befreit.

Das Rohprodukt, welches als dickflüssiges Oel in quantitativer Ausbeute anfällt, ist dünnschichtchromatographisch einheitlich und kristallisiert nach einem Tag.

Ausbeute : 8,2 g Produkt der Formel

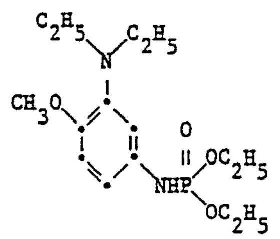

(13)

vom Schmelzpunkt 40-42 °C.

Die Analyse :

| | | | | | |
|---|---|---|---|---|---|
| ber. % | C | 54,54 | gef. % | C | 54,39 |
| ber. % | H | 8,24 | gef. % | H | 8,37 |
| ber. % | N | 8,48 | gef. % | N | 8,48 |

bestätigt die Summenformel.

### Beispiel 2

Nach der in Beispiel 1 beschriebenen Methode werden 4,9 g 3-N,N-Diäthyl-4-methoxyanilin in 50 ml Tetrachlorkohlenstoff mit 6 g technischem Dibutylphosphit und 0,5 g Benzyltributylammoniumbromid unter Zutropfen von Natronlauge umgesetzt. Die Reaktionszeit beträgt 4 Stunden.

Nach Aufarbeitung erhält man 8 g des öligen Rohproduktes. Die Abrennung der Nebenprodukte von einer Probe dieses Oels erfolgt säulenchromatographisch. Als Säulenfüllmaterial wird Silikagel und als Laufmittel ein Lösungsmittelgemisch aus Chloroform und Methanol verwendet.

Ausbeute : 4 g Produkt der Formel

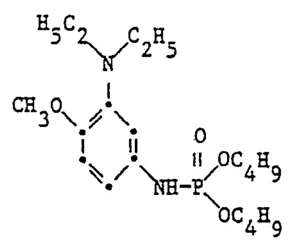

(14)

als dickflüssiges Oel.

Die Analyse :

| | | | | | |
|---|---|---|---|---|---|
| ber. % | C | 59,05 | gef. % | C | 58,79 |
| ber. % | H | 9,13 | gef. % | H | 9,13 |
| ber. % | N | 7,25 | gef. % | N | 7,25 |

bestätigt die Summenformel.

### Beispiel 3

Eine Lösung von 21 g 2-[5'-Amino-2'-methoxyphenyl-] amino-1-methoxypropan in 200 ml Tetrachlorkohlenstoff wird mit 16 g Diäthylphosphit, 1,5 g Tetrabutylammonium versetzt. Dazu werden unter

kräftigem Rühren 16 ml 30 %ige Natronlauge zugegeben. Die einsetzende Reaktion verläuft stark exotherm. Nach Abklingen der Wärmetönung wird die Reaktionsmischung 2,5 Stunden bei 55-60 °C gerührt.

Die Aufarbeitung des in quantitativer Ausbeute anfallenden öligen Rohproduktes erfolgt nach der in Beispiel 1 angegebenen Methode.

Ausbeute : 36,2 g Produkt der Formel

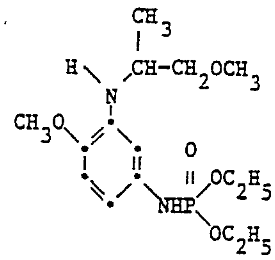

(18)

als dickflüssiges Oel, das nach Kernresonanzspektrum noch kleine Mengen von Diäthylphosphit enthält, und der angegebenen Konstitution entspricht. Das Produkt kann ohne Reinigung zur Herstellung von Azofarbstoffen verwendet werden.

Beispiel 4

Wie in Beispiel 1 beschrieben (Lösungsmittel $CCl_4$, Katalysator Benzyltributylammoniumbromid), jedoch bei einer Reaktionstemperatur von 15-25 °C, werden die in der folgenden Tabelle zusammengestellten Verbindungen der Formel

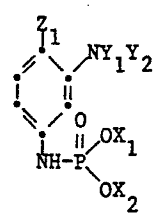

hergestellt :

(Siehe Tabelle 1 Seite 15 f.)

Tabelle 1

| Verbindung Nr. | $Z_1$ | $NY_1Y_2$ | 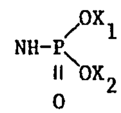 | Ausbeute % | CHN-Analyse |
|---|---|---|---|---|---|
| 12 | H | $N(C_2H_5)_2$ | $NHP(O)(OC_2H_5)_2$ | 39 | % ber.: C 55,99 H 8,39 N 9,33<br>% gef.: 55,96 8,34 9,39 |
| 16 | $OCH_3$ | $N(C_4H_9)_2$ | $NHP(O)(OC_6H_5)_2$ | 44 | % ber.: C 67,21 H 7,32 N 5,81<br>% gef.: 67,49 7,39 5,82 |
| 26 | $OCH_3$ | 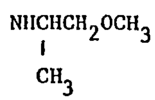 | $NHP(O)(OC_4H_9)_2$ | 80 | % ber.: C 56,71 H 8,77 N 6,97<br>% gef.: 55,82 8,77 6,72 |
| 30 | $OCH_3$ | $NHCH_2C_6H_5$ | $NHP(O)(OCH_2C_6H_5)_2$ | 100 | % ber.: C 68,84 H 5,98 N 5,73<br>% gef.: 68,71 6,01 5,68 |
| 36 | $OCH_3$ | 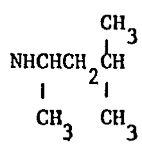 | $NHP(O)[OCH(CH_3)_2]_2$ | 91 | % ber.: C 59,05 H 9,13 N 7,25<br>% gef.: 58,14 9,18 7,42 |

Tabelle 2

| Verbindung Nr. | $Z_1$ | $NY_1Y_2$ | 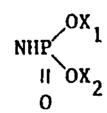 | Ausbeute % | NMR-Daten in δ[ppm]; $CDCl_3$ (Zahl der Protonen) |
|---|---|---|---|---|---|
| 13 | $OCH_3$ | $N(C_2H_5)_2$ | $NHP(O)(OC_2H_5)_2$ | 99 | 1,05(6); 1,25(6); 3,1(4); 3,8(3); 4,1(4); 6,2-6,85(4) |
| 14 | $OCH_3$ | $N(C_2H_5)_2$ | $NHP(O)(OC_4H_9)_2$ | 83 | 0,7-1,75(20); 3,15(4); 3,8(3); 4,05(4); 6,3(1); 6,7(3) |
| 15 | $OCH_3$ | $N(C_4H_9)_2$ | $NHP(O)(OCH_3)_2$ | 98 | 0,7-1,7(14), 3,1(4); 3,7-3,9(6); 3,8(3); 6,2(1); 6,7(3) |
| 17 | H | $NHC_2H_4CN$ | $NHP(O)(OC_4H_9)_2$ | 33 | 0,7-1,9(14); 2,6(2); 3,45(2); 4,05(5); 6,1-6,6(4); 6,9-7,3(1) |
| 18 | $OCH_3$ | $NHCH(CH_3)CH_2OCH_3$ | $NHP(O)(OC_2H_5)_2$ | 100 | 1,15-1,45(9); 3,4(3); 3,5(2); 3,8(3); 3,9-4,5(6); 5,85-6,85(4) |
| 19 | $CH_3$ | $NHCH(CH_3)C_2H_5$ | $NHP(O)(OC_2H_5)_2$ | 74 | 0,7-1,5(12); 2,5(3); 3,4(1); 3,8-4,5(5); 6,35-7,85(4); 8,7(1) |
| 20 | $OCH_3$ | $NHCH(CH_3)CH_2OCH_3$ | $NHP(O)(OC_8H_{17})_2$ | 72 | 0,7-1,9(33); 3,35(3); 3,45(2); 3,8(3); 4,0(5); 5,25(1); 6,1-6,8(3) |

Tabelle 2 (Fortsetzung)

| Verbindung Nr. | $Z_1$ | $NY_1Y_2$ | 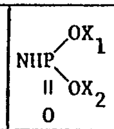 | Ausbeute % | NMR-Daten in δ[ppm]; $CDCl_3$ (Zahl der Protonen) |
|---|---|---|---|---|---|
| 21 | H | $NHC_2H_4CN$ | $NHP(O)(OC_8H_{17})_2$ | 72 | 0,7-2,0(30); 2,6(2); 3,45(2); 4,0(4), 4,75(1); 6,1-6,7(4), 6,9-7,5(1) |
| 22 | $OCH_3$ | $NHCH(CH_3)CH_2CH(CH_3)_2$ | $NHP(O)(OCH_3)OC_2H_5$ | 88 | 0,85-2,0(15); 3,5(1); 3,65-3,85(3); 3,8(3); 4,15(3); 6-6,8(4) |
| 23 | H | $N(CH_3)_2$ | $NHP(O)(OC_2H_4Cl)_2$ | 100 | 2,7(6); 3,7(4); 4,1-4,5(4); 6,0-7,2(5) |
| 27 | $CH_3$ | $N(CH_3)_2$ | $NHP(O)(OC_2H_4Cl)_2$ | 75 | 2,25(3); 2,7(6); 3,7(4); 4,1-4,5(4); 6,2-7,3(4) |
| 28 | $OCH_3$ | $N(C_2H_5)_2$ | $NHP(O)(OC_2H_4OC_2H_5)_2$ | 100 | 0,9-1,3(12); 2,95-3,75(12); 3,8(3); 4,05-4,4(4); 6,25(1), 6,75(3) |
| 29 | $OCH_3$ | $NHCH(CH_3)CH_2OCH_3$ | $NHP(O)(OC_2H_4OC_2H_5)_2$ | 82 | 1-1,4(9); 3,3-3,8(17); 4-4,4(5); 5,85(1); 6,2-6,8(3) |
| 31 | $OCH_3$ | $N(C_2H_5)_2$ | $NHP(O)(OC_8H_{17})_2$ | 100 | 0,6-2,0(36); 3,15(4); 3,77(3); 4,04(4); 6,0-6,9(4) |
| 32 | $CH_3OC_2H_4O$ | $NHCH(CH_3)CH_2OCH_3$ | $NHP(O)(OC_4H_9)_2$ | 71 | 0,67-1,9(17); 3,2-4,3(18; 5,8(1), 6,15-6,85(3) |
| 33 | $OCH_3$ | $NHCH(CH_3)C_2H_5$ | $NHP(O)(OC_4H_9)_2$ | 82 | 0,7-2,0(22); 3,3(1); 3,77(3); 3,8-4,35(5); 6,0-6,75(4) |

Tabelle 2 (Fortsetzung)

| Verbindung Nr | $Z_1$ | $NY_1Y_2$ | 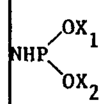 | Ausbeute % | NMR-Daten in [ppm]; $CDCl_3$ (Zahl der Protonen). |
|---|---|---|---|---|---|
| 34 | $OCH_3$ | $NHCH(CH_3)CH_2CH(CH_3)_2$ | 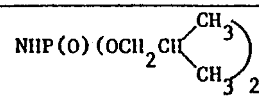 | 85 | 0,8-2,15(26); 3,75(3); 3,20-4,10(6); 5,8(1); 6,1-6,75(3) |
| 35 | $CH_3O$ | $NHCH(CH_3)CH_2CH(CH_3)_2$ | $NHP(O)(OC_2H_5)_2$ | 84 | 0,9(6); 1,1-1,8(12); 3,5(1); 3,77(3); 4,08(5); 5,8(1); 6,1-6,75(3) |
| 37 | $CH_3O$ | $NHCH(CH_3)CH_2OCH_3$ | 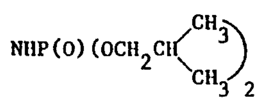 | 96 | 0,9(12); 1,24(3); 1,6-2,15(2); 3,33-3,45(5); 3,6-3,9(8); 4,2(1); 5,5(1); 6,1-6,75(3) |
| 38 | $CH_3OC_2H_4O$ | $NHCH(CH_3)CH_2OCH_3$ | $NHP(O)(OC_2H_5)_2$ | 97 | 1,32(9); 3,37-3,42(7); 3,5-3,9(4); 3,95-4,65(7); 5,9-6,75(4) |
| 24 | 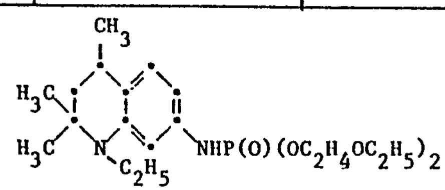 | | | 94 | 1,0-1,83(21); 3,1-3,85(10); 4,0-4,45(4); 5,9(1); 6,17-7,10(3) |
| 25 | 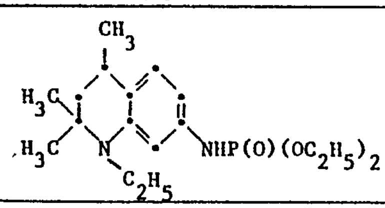 | | | 88 | 1,0-1,5(18; 1,5-1,9(2); 3,25(2); 4,15(4); 5,45(1); 6-6,35(2); 7,0(1) |

Beispiel 5

Wie in Beispiel 1 beschrieben, wird eine Lösung von 3 g 4-Amino-2-nitro-toluol in 40 ml Tetrachlorkohlenstoff mit 3,2 ml Diäthylphosphit und 2,5 ml Natronlauge versetzt, wobei die Reaktionstemperatur 15-30 °C beträgt. Nach 6 Stunden Rührdauer wird das Produkt isoliert.

Ausbeute : 4,3 g Produkte der Formel

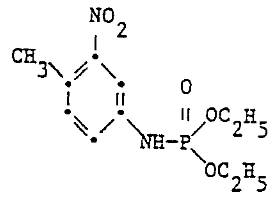

(39)

vom Schmelzpunkt 124-125 °C.

3,8 g der Verbindung (39) werden in 50 ml Aethyl-methyl-keton in Gegenwart eines Platinkatalysators (5 % Pt/C) reduzierend alkyliert.

Ausbeute : 4,1 g Produkt der Formel

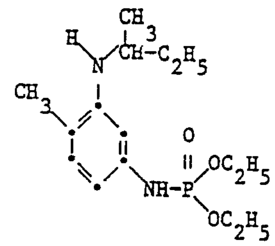

(19)

dessen NMR-Spektrum der erwarteten Konstitution entspricht.

**Ansprüche**

1. N-Phenylphosphoramidsäurediester, dadurch gekennzeichnet, dass sie der Formel

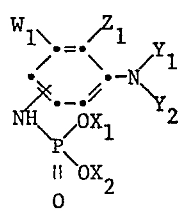

(1)

entsprechen, worin

$X_1$ und $X_2$ unabhängig voneinander gegebenenfalls substituiertes Alkyl mit 1 bis 24 Kohlenstoffatomen, Alkenyl mit 2 bis 4 Kohlenstoffatomen, gegebenenfalls substituiertes Cycloalkyl mit 5 oder 6 Kohlenstoffatomen, gegebenenfalls substituiertes Aralkyl mit 1 bis 4 Kohlenstoffatomen im Alkylteil oder gegebenenfalls substituiertes Aryl sind,

$Y_1$ Wasserstoff oder gegebenenfalls substituiertes Alkyl mit 1 bis 8 Kohlenstoffatomen,

$Y_2$ gegebenenfalls substituiertes Alkyl mit 1 bis 8 Kohlenstoffatomen, Alkenyl mit 2 bis 4 Kohlenstoffatomen, gegebenenfalls substituiertes Aralkyl mit 1 bis 4 Kohlenstoffatomen im Alkylteil oder gegebenenfalls substituiertes Aryl ist oder zusammen mit $Y_1$ die zur Vervollständigung eines Pyrrolidin-, Piperidin-, Piperazin- oder Morpholinringes notwendigen Atome darstellt, wobei diese Ringe gegebenenfalls mit Acyloxy oder Carbalkoxy mit je 2 bis 5 Kohlenstoffatomen substituiert sind,

$Z_1$ Wasserstoff, gegebenenfalls substituiertes Alkyl mit 1 bis 4 Kohlenstoffatomen, Alkenyl mit 2 bis 4 Kohlenstoffatomen, gegebenenfalls substituiertes Alkoxy mit 1 bis 5 Kohlenstoffatomen, gegebenenfalls substituiertes Aryl oder Aryloxy, gegebenenfalls substituiertes Alkylthio mit 1 bis 5 Kohlenstoffatomen, gegebenenfalls substituiertes Arylthio, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist,

$W_1$ Wasserstoff, Alkyl oder Alkoxy mit je 1 bis 4 Kohlenstoffatomen, Acyl mit 2 oder 3 Kohlenstoffatomen oder zusammen mit $Z_1$ die zur Vervollständigung eines Benzolringes notwendigen Atome bedeutet, der gegebenenfalls mit Hydroxyl, Halogen, Cyano, Nitro oder Carboxyl substituiert ist, ausgenommen die Verbindungen Diäthyl-, Diphenyl- und Dibenzyl-N-(p-dimethylaminophenyl)-amidophosphat.

2. Verbindungen nach Anspruch 1, dadurch gekennzeichnet, dass sie der Formel

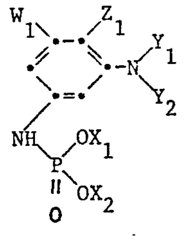

(2)

entsprechen, worin $X_1$, $X_2$, $Y_1$, $Y_2$, $Z_1$ und $W_1$ die in Anspruch 1 angegebenen Bedeutungen haben.

3. Verbindungen nach Anspruch 2, dadurch gekennzeichnet, dass sie der Formel

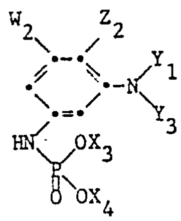

(3)

entsprechen, worin

$X_3$ und $X_4$ unabhängig voneinander gegebenenfalls substituiertes Alkyl mit 1 bis 24 Kohlenstoffatomen, Alkenyl mit 2 bis 4 Kohlenstoffatomen, Cycloalkyl mit 5 oder 6 Kohlenstoffatomen, gegebenenfalls substituiertes Benzyl oder gegebenenfalls substituiertes Phenyl sind,

$Y_3$ gegebenenfalls substituiertes Alkyl mit 1 bis 6 Kohlenstoffatomen, Alkenyl mit 2 bis 4 Kohlenstoffatomen, gegebenenfalls substituiertes Benzyl oder gegebenenfalls substituiertes Phenyl ist oder zusammen mit $Y_1$ die zur Vervollständigung eines Pyrrolidin-, Piperidin-, Piperazin- oder Morpholinringes notwendigen Atome darstellt, wobei diese Ringe gegebenenfalls mit Acyloxy oder Carbalkoxy mit je 2 bis 5 Kohlenstoffatomen substituiert sind,

$Z_2$ Wasserstoff, gegebenenfalls substituiertes Alkyl mit 1 bis 4 Kohlenstoffatomen, Alkenyl mit 2 bis 4 Kohlenstoffatomen, gegebenenfalls substituiertes Alkoxy mit 1 bis 5 Kohlenstoffatomen, gegebenenfalls substituiertes Phenyl oder Phenoxy, gegebenenfalls substituiertes Alkylthio mit 1 bis 5 Kohlenstoffatomen, gegebenenfalls substituiertes Phenylthio, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist,

$W_2$ Wasserstoff, Alkyl oder Alkoxy mit je 1 bis 4 Kohlenstoffatomen, Acyl mit 2 oder 3 Kohlenstoffatomen oder zusammen mit $Z_2$ die zur Vervollständigung eines ankondensierten Benzolringes notwendigen Atome bedeutet, der gegebenenfalls mit Hydroxyl, Halogen, Cyano, Nitro oder Carboxyl substituiert ist, und

$Y_1$ die in Anspruch 2 angegebene Bedeutung hat.

4. Verbindungen nach Anspruch 3, dadurch gekennzeichnet, dass sie der Formel

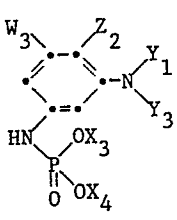

(4)

entsprechen, worin

$W_3$ Wasserstoff oder zusammen mit $Z_2$ die zur Vervollständigung eines ankondensierten Benzolringes notwendigen Atome bedeutet, und der gegebenenfalls mit Hydroxyl, Halogen, Cyano, Nitro oder Carboxyl substituiert ist.

$X_3$, $X_4$, $Y_1$, $Y_3$ und $Z_2$ die in Anspruch 3 angegebene Bedeutung haben.

5. Verbindungen nach Anspruch 4, dadurch gekennzeichnet, dass sie der Formel

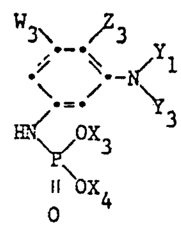

(5)

entsprechen, worin

$Z_3$ Wasserstoff, gegebenenfalls substituiertes Alkyl mit 1 bis 4 Kohlenstoffatomen, gegebenenfalls substituiertes Alkoxy mit 1 bis 5 Kohlenstoffatomen, gegebenenfalls substituiertes Alkylmercapto mit 1 bis 5 Kohlenstoffatomen, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist, und

$X_3$, $X_4$, $Y_1$, $Y_3$ und $W_3$ die in Anspruch 4 angegebene Bedeutung haben.

6. Verbindungen nach Anspruch 5, dadurch gekennzeichnet, dass sie der Formel

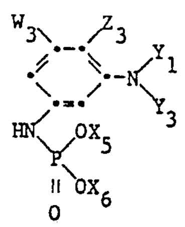

(6)

entsprechen, worin

$X_5$ und $X_6$ unabhängig voneinander gegebenenfalls substituiertes Alkyl mit 1 bis 18 Kohlenstoffatomen, Cycloalkyl mit 5 oder 6 Kohlenstoffatomen, Benzyl oder Phenyl sind, und

$Y_1$, $Y_3$, $W_3$ und $Z_3$ die in Anspruch 5 angegebene Bedeutung haben.

7. Verbindungen nach Anspruch 6, dadurch gekennzeichnet, dass sie der Formel

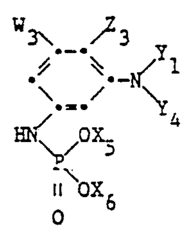

(7)

entsprechen, worin

$Y_4$ gegebenenfalls mit Carbalkoxy oder Acyloxy mit je 2 bis 5 Kohlenstoffatomen, Alkoxy mit 1 bis 4 Kohlenstoffatomen, Hydroxyl oder Cyano substituiertes Alkyl mit 1 bis 6 Kohlenstoffatomen, Benzyl oder Phenyl ist oder zusammen mit $Y_1$ die zur Vervollständigung eines gegebenenfalls mit Carbalkoxy mit 2 bis 5 Kohlenstoffatomen substituierten Pyrrolidinrings notwendigen Atome darstellt,

$X_5$, $X_6$, $Y_1$, $W_3$ und $Z_3$ die in Anspruch 6 angegebene Bedeutung haben.

8. Verbindungen nach Anspruch 7, dadurch gekennzeichnet, dass sie der Formel

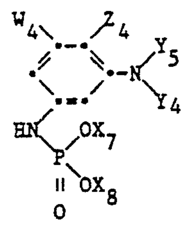

(8)

entsprechen, worin

$X_7$ und $X_8$ unabhängig voneinander gegebenenfalls mit Alkoxy mit 1 bis 4 Kohlenstoffatomen, Halogen oder Phenyl substituiertes Alkyl mit 1 bis 18 Kohlenstoffatomen, Cycloalkyl mit 5 oder 6 Kohlenstoffatomen, Benzyl oder Phenyl sind,

$Y_5$ Wasserstoff oder gegebenenfalls mit Hydroxyl, Cyano oder mit Alkoxy mit 1 bis 4 Kohlenstoffatomen substituiertes Alkyl mit 1 bis 5 Kohlenstoffatomen,

$W_4$ Wasserstoff oder zusammen mit $Z_4$ die zur Vervollständigung eines ankondensierten Benzolringes notwendigen Atome bedeutet,

$Z_4$ Wasserstoff, Alkyl mit 1 bis 4 Kohlenstoffatomen, gegebenenfalls substituiertes Alkoxy mit 1 bis 5 Kohlenstoffatomen, Halogen, Carbalkoxy mit 2 bis 5 Kohlenstoffatomen oder diejenigen Atome bedeutet, die zusammen mit $Y_1$ einen Piperidin- oder Morpholinring bilden, der gegebenenfalls mit Methyl substituiert ist, und

$Y_4$ die in Anspruch 7 angegebene Bedeutung hat.

9. Verfahren zur Herstellung der Verbindungen der Formel

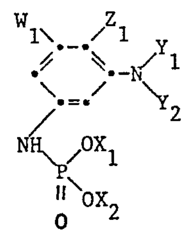

(1)

worin $X_1$, $X_2$, $Y_1$, $Y_2$, $Z_1$ und $W_1$ die in Anspruch 1 angegebene Bedeutung haben, dadurch gekennzeichnet, dass man Aniline der Formel

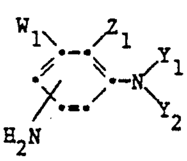

(31)

worin $Y_1$, $Y_2$, $Z_1$ und $W_1$ die in Anspruch 1 angegebene Bedeutung haben, mit Phosphiten der Formel

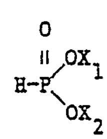

(32)

worin $X_1$ und $X_2$ die in Anspruch 1 angegebene Bedeutung haben, in Gegenwart eines Katalysators und einer anorganischen Base in Tetrachlorkohlenstoff als Lösungsmittel, gegebenenfalls in Kombination mit weiteren organischen Lösungsmitteln, bei Temperaturen zwischen 0 °C und 100 °C und gegebenenfalls unter Schutzgasatmosphäre umsetzt.

10. Verwendung der Verbindungen nach einem der Ansprüche 1 bis 8 als Kupplungskomponenten zur Herstellung von Azofarbstoffen.

**Claims**

1. An N-phenyl-phosphamic acid diester of the formula

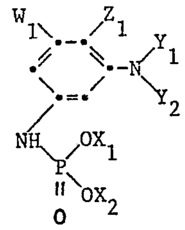

(1)

in which

$X_1$ und $X_2$, independently of one another, are substituted or unsubstituted alkyl having 1 to 24 carbon atoms, alkenyl having 2 to 4 carbon atoms, substituted or unsubstituted cycloalkyl having 5 or 6 carbon atoms, substituted or unsubstituted aralkyl having 1 to 4 carbon atoms in the alkyl moiety or substituted or unsubstituted aryl,

$Y_1$ is hydrogen or substituted or unsubstituted alkyl having 1 to 8 carbon atoms,

$Y_2$ is substituted or unsubstituted alkyl having 1 to 8 carbon atoms, alkenyl having 2 to 4 carbon atoms, substituted or unsubstituted aralkyl having 1 to 4 carbon atoms in the alkyl moiety or substituted or unsubstituted aryl, or $Y_2$ and $Y_1$ together are the atoms required to complete a pyrrolidine, piperidine, piperazine or morpholine ring, these rings being unsubstituted or substituted by acyloxy or carbalkoxy each having 2 to 5 carbon atoms,

$Z_1$ is hydrogen, substituted or unsubstituted alkyl having 1 to 4 carbon atoms, alkenyl having 2 to 4 carbon atoms, substituted or unsubstituted alkoxy having 1 to 5 carbon atoms, substituted or unsubstituted aryl or aryloxy, substituted or unsubstituted alkylthio having 1 to 5 carbon atoms, substituted or unsubstituted arylthio, halogen or carbalkoxy having 2 to 5 carbon atoms, or is those atoms which together with $Y_1$ form a piperidine or morpholine ring, which is unsubstituted or substituted with methyl, and

$W_1$ is hydrogen, alkyl or alkoxy, each having 1 to 4 carbon atoms, or acyl having 2 or 3 carbon atoms, or $W_1$ and $Z_1$ together are the atoms required to complete a benzene ring, which is unsubstituted or substituted by hydroxyl, halogen, cyano, nitro or carboxyl, with the exception of the compounds diethyl-, diphenyl- and dibenzyl-N-(p-dimethylaminophenyl)-amidophosphate.

2. A compound according to claim 1, of the formula

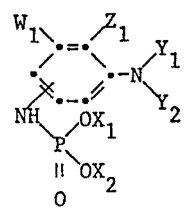

(2)

in which $X_1$, $X_2$, $Y_1$, $Y_2$, $Z_1$ and $W_1$ are as defined in claim 1.

3. A compound according to claim 2, of the formula

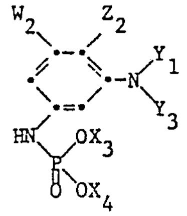

(3)

in which

$X_3$ and $X_4$ independently of one another are substituted or unsubstituted alkyl having 1 to 24 carbon atoms, alkenyl having 2 to 4 carbon atoms, cycloalkyl having 5 or 6 carbon atoms, substituted or unsubstituted benzyl or substituted or unsubstituted phenyl,

$Y_3$ is substituted or unsubstituted alkyl having 1 to 6 carbon atoms, alkenyl having 2 to 4 carbon atoms, substituted or unsubstituted benzyl or substituted or unsubstituted phenyl, or $Y_3$ and $Y_1$ together are the atoms required to complete a pyrrolidine, piperidine, piperazine or morpholine ring, these rings being unsubstituted or substituted by acyloxy or carbalkoxy each having 2 to 5 carbon atoms,

$Z_2$ is hydrogen, substituted or unsubstituted alkyl having 1 to 4 carbon atoms, alkenyl having 2 to 4 carbon atoms, substituted or unsubstituted alkoxy having 1 to 5 carbon atoms, substituted or

unsubstituted phenyl or phenoxy, substituted or unsubstituted alkylthio having 1 to 5 carbon atoms, substituted or unsubstituted phenylthio, halogen or carbalkoxy having 2 to 5 carbon atoms, or is those atoms which together with $Y_1$ form a piperidine or morpholine ring, which is unsubstituted or substituted with methyl,

$W_2$ is hydrogen, alkyl or alkoxy each having 1 to 4 carbon atoms or acyl having 2 or 3 carbon atoms, or $W_2$ and $Z_2$ together are the atoms required to complete a fused-on benzene ring, which is unsubstituted or substituted by hydroxyl, halogen, cyano, nitro or carboxyl, and

$Y_1$ is as defined in claim 2.

4. A compound according to claim 3, of the formula

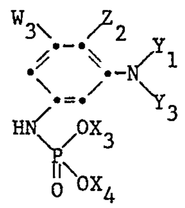

(4)

in which

$W_3$ is hydrogen, or $W_3$ and $Z_2$ together are the atoms required to complete a fused-on benzene ring, which is unsubstituted or substituted by hydroxyl, halogen, cyano, nitro or carboxyl, and

$X_3$, $X_4$, $Y_1$, $Y_3$ and $Z_2$ are as defined in claim 3.

5. A compound according to claim 4, of the formula

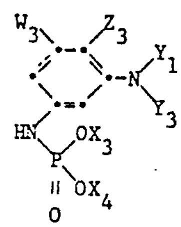

(5)

in which

$Z_3$ is hydrogen, substituted or unsubstituted alkyl having 1 to 4 carbon atoms, substituted or unsubstituted alkoxy having 1 to 5 carbon atoms, substituted or unsubstituted alkylmercapto having 1 to 5 carbon atoms, halogen or carbalkoxy having 2 to 5 carbon atoms, or is those atoms which together with $Y_1$ form a piperidine or morpholine ring, which is unsubstituted or substituted with methyl, and

$X_3$, $X_4$, $Y_1$, $Y_3$ and $W_3$ are as defined in claim 4.

6. A compound according to claim 5, of the formula

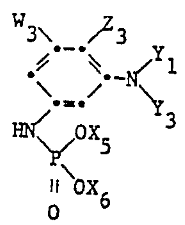

(6)

in which

$X_5$ and $X_6$ independently of one another are substituted or unsubstituted alkyl having 1 to 18 carbon atoms, cycloalkyl having 5 or 6 carbon atoms, benzyl or phenyl and

$Y_1$, $Y_3$, $W_3$ and $Z_3$ are as defined in claim 5.

7. A compound according to claim 6, of the formula

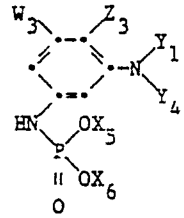

(7)

in which

$Y_4$ is alkyl, having 1 to 6 carbon atoms, which can be substituted by carbalkoxy or acyloxy, each having 2 to 5 carbon atoms, by alkoxy having 1 to 4 carbon atoms, by hydroxyl or by cyano, or is benzyl or phenyl, or $Y_4$ and $Y_1$ together are the atoms required to complete a pyrrolidine ring which can be substituted by carbalkoxy, having 2 to 5 carbon atoms, and

$X_5$, $X_6$, $Y_1$, $W_3$ and $Z_3$ are as defined in claim 6.

8. A compound according to claim 7, of the formula

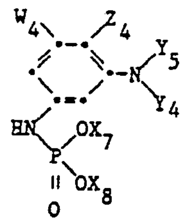

(8)

in which

$X_7$ and $X_8$ independently of one another are alkyl having 1 to 18 carbon atoms which can be substituted by alkoxy having 1 to 4 carbon atoms or by halogen or phenyl, or are cycloalkyl having 5 or 6 carbon atoms, or benzyl or phenyl,

$Y_5$ is hydrogen or alkyl having 1 to 5 carbon atoms which can be substituted by hydroxyl, by cyano or by alkoxy having 1 to 4 carbon atoms,

$W_4$ is hydrogen, or $W_4$ and $Z_4$ together are the atoms required to complete a fused benzene ring,

$Z_4$ is hydrogen, alkyl having 1 to 4 carbon atoms, unsubstituted or substituted alkoxy having 1 to 5 carbon atoms, halogen or carbalkoxy having 2 to 5 carbon atoms, or is those atoms which together with $Y_1$ form a piperidine or morpholine ring, which is unsubstituted or substituted with methyl, and

$Y_4$ is as defined in claim 7.

9. A process for the preparation of a compound of the formula

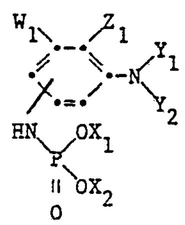

(1)

in which $X_1$, $X_2$, $Y_1$, $Y_2$, $Z_1$ and $W_1$ are as defined in claim 1, wherein an aniline of the formula

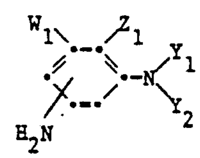

(31)

in which $Y_1$, $Y_2$, $Z_1$ and $W_1$ are as defined in claim 1, is reacted with a phosphite of the formula

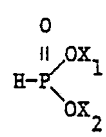

(32)

in which $X_1$ and $X_2$ are as defined in claim 1, in the presence of a catalyst and of an inorganic base, in carbon tetrachloride as solvent, which can be combined with other organic solvents, at temperatures between 0 °C and 100 °C, optionally under an inert gas atmosphere.

10. The use of the compounds according to any one of claims 1 to 8 as coupling components for producing azo dyes.

**Revendications**

1. Diesters d'acide N-phénylamidophosphorique, caractérisés par le fait qu'ils correspondent à la formule

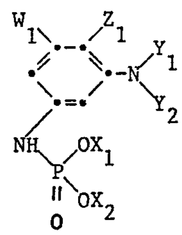

(1)

dans laquelle

$X_1$ et $X_2$ indépendamment l'un de l'autre, sont des groupes alkyle ayant 1 à 24 atomes de carbone, éventuellement substitués, alcényle ayant 2 à 4 atomes de carbone, cycloalkyle ayant 5 ou 6 atomes de carbone, éventuellement substitués, aralkyle éventuellement substitués ayant 1 à 4 atomes de carbone dans la partie alkyle, ou aryle éventuellement substitués,

$Y_1$ est de l'hydrogène ou un groupe alkyle ayant 1 à 8 atomes de carbone, éventuellement substitué,

$Y_2$ est un groupe alkyle ayant 1 à 8 atomes de carbone, éventuellement substitué, alcényle ayant 2 à 4 atomes de carbone, aralkyle éventuellement substitué ayant 1 à 4 atomes de carbone dans la partie alkyle, ou aryle éventuellement substitué, ou bien $Y_2$ forme ensemble avec $Y_1$ les atomes nécessaires pour compléter un noyau pyrrolidine, pipéridine, pipérazine ou morpholine, ces noyaux étant éventuellement substitués par des radicaux acyloxy ou carbalcoxy ayant chacun 2 à 5 atomes de carbone,

$Z_1$ est de l'hydrogène, un groupe alkyle ayant 1 à 4 atomes de carbone, éventuellement substitué, alcényle ayant 2 à 4 atomes de carbone, alcoxy ayant 1 à 5 atomes de carbone, éventuellement substitué, aryle ou aryloxy, éventuellement substitué, alkylthio ayant 1 à 5 atomes de carbone, éventuellement substitué, arylthio éventuellement substitué, halogéno, carbalcoxy ayant 2 à 5 atomes de carbone, ou bien $Z_1$ désigne ceux des atomes qui forment ensemble avec $Y_1$ un noyau pipéridine ou morpholine qui est éventuellement substitué par le radical méthyle,

$W_1$ est de l'hydrogène, un groupe alkyle ou alcoxy ayant chacun 1 à 4 atomes de carbone, acyle ayant 2 ou 3 atomes de carbone, ou bien $W_1$ forme ensemble avec $Z_1$ les atomes nécessaires pour compléter un noyau benzénique qui est éventuellement substitué par des radicaux hydroxyle, halogéno, cyano, nitro ou carboxyle ; à l'exclusion des composés diéthyl-, diphényl- et dibenzyl-N-(p-diméthylaminophényl)-amidophosphates.

2. Composés selon la revendication 1, caractérisés par le fait qu'ils correspondent à la formule

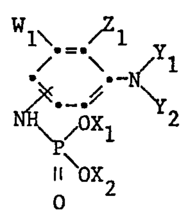

(2)

dans laquelle $X_1$, $X_2$, $Y_1$, $Y_2$, $Z_1$ et $W_1$ ont les significations indiquées dans la revendication 1.

3. Composés selon la revendication 2, caractérisés par le fait qu'ils correspondent à la formule

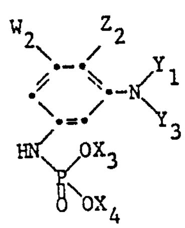

(3)

dans laquelle

$X_3$ et $X_4$, indépendamment l'un de l'autre, sont des groupes alkyle ayant 1 à 24 atomes de carbone, éventuellement substitués, alcényle ayant 2 à 4 atomes de carbone, cycloalkyle ayant 5 ou 6 atomes de carbone, benzyle éventuellement substitués, ou phényle éventuellement substitués,

$Y_3$ est un groupe alkyle ayant 1 à 6 atomes de carbone, éventuellement substitué, alcényle ayant 2 à 4 atomes de carbone, benzyle éventuellement substitué, ou phényle éventuellement substitué, ou bien $Y_3$ représente ensemble avec $Y_1$ les atomes nécessaires pour compléter un noyau pyrrolidine, pipéridine, pipérazine ou morpholine, ces noyaux étant éventuellement substitués par des radicaux acyloxy ou carbalcoxy ayant chacun 2 à 5 atomes de carbone,

$Z_2$ est de l'hydrogène, un groupe alkyle ayant 1 à 4 atomes de carbone, éventuellement substitué, alcényle ayant 2 à 4 atomes de carbone, alcoxy ayant 1 à 5 atomes de carbone, éventuellement substitué, phényle ou phénoxy, éventuellement substitué, alkylthio ayant 1 à 5 atomes de carbone, éventuellement substitué, phénylthio éventuellement substitué, halogéno, carbalcoxy ayant 2 à 5 atomes de carbone, où $Z_2$ désigne ceux des atomes qui forment ensemble avec $Y_1$ un noyau pipéridine ou morpholine, qui est éventuellement substitué par le radical méthyle,

$W_2$ est de l'hydrogène, un groupe alkyle ou alcoxy ayant chacun 1 à 4 atomes de carbone, acyle ayant 2 ou 3 atomes de carbone, ou bien $W_2$ désigne ensemble avec $Z_2$ les atomes nécessaires pour compléter un noyau benzénique fixé par condensation, qui est éventuellement substitué par des radicaux hydroxyle, halogéno, cyano, nitro ou carboxyle, et

$Y_1$ a la signification donnée dans la revendication 2.

4. Composés selon la revendication 3, caractérisés par le fait qu'ils correspondent à la formule

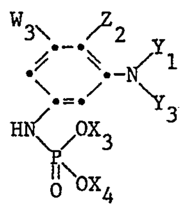

(4)

dans laquelle

$W_3$ est de l'hydrogène ou désigne ensemble avec $Z_2$ les atomes nécessaires pour compléter un noyau benzénique fixé par condensation, et qui est éventuellement substitué par des radicaux hydroxyle, halogéno, cyano, nitro ou carboxyle,

$X_3$, $X_4$, $Y_1$, $Y_3$ et $Z_2$ ont les significations indiquées dans la revendication 3.

5. Composés selon la revendication 4, caractérisés par le fait qu'ils correspondent à la formule

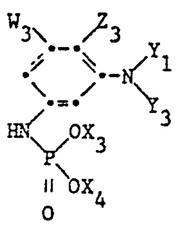

(5)

dans laquelle

$Z_3$ est de l'hydrogène, un groupe alkyle ayant 1 à 4 atomes de carbone, éventuellement substitué, alcoxy ayant 1 à 5 atomes de carbone, éventuellement substitué, alkylmercapto ayant 1 à 5 atomes de carbone, éventuellement substitué, halogéno, carbalcoxy ayant 2 à 5 atomes de carbone, où $Z_3$ désigne ceux des atomes qui forment ensemble avec $Y_1$ un noyau pipéridine ou morpholine qui est éventuellement substitué par le radical méthyle, et

$X_3$, $X_4$, $Y_1$, $Y_3$ et $W_3$ ont les définitions données dans la revendication 4.

6. Composés selon la revendication 5, caractérisés par le fait qu'ils correspondent à la formule

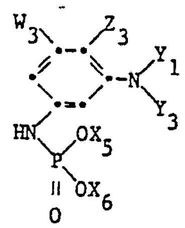

(6)

dans laquelle

$X_5$ et $X_6$, indépendamment l'un de l'autre, sont des groupes alkyle ayant 1 à 18 atomes de carbone, éventuellement substitués, cycloalkyle ayant 5 ou 6 atomes de carbone, benzyle ou phényle, et

$Y_1$, $Y_3$, $W_3$ et $Z_3$ ont les significations données dans la revendication 5.

7. Composés selon la revendication 6, caractérisés par le fait qu'ils correspondent à la formule

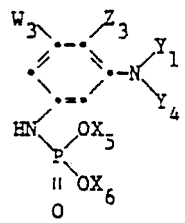

(7)

dans laquelle

$Y_4$ est un groupe alkyle ayant 1 à 6 atomes de carbone, éventuellement substitué par des radicaux carbalcoxy ou acyloxy ayant chacun 2 à 5 atomes de carbone, alcoxy ayant 1 à 4 atomes de carbone, hydroxyle ou cyano, un groupe benzyle ou phényle, ou $Y_4$ forme ensemble avec $Y_1$ les atomes nécessaires pour compléter un noyau pyrrolidine éventuellement substitué par un radical carbalcoxy ayant 2 à 5 atomes de carbone,

$X_5$, $X_6$, $Y_1$, $W_3$ et $Z_3$ ont les significations données dans la revendication 6.

8. Composés selon la revendication 7, caractérisés par le fait qu'ils correspondent à la formule

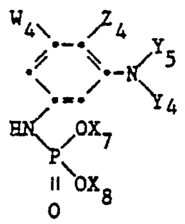

(8)

dans laquelle

$X_7$ et $X_8$, indépendamment l'un de l'autre, sont des groupes alkyle ayant 1 à 18 atomes de carbone, éventuellement substitués par des radicaux alcoxy ayant 1 à 4 atomes de carbone, halogéno ou phényle, des groupes cycloalkyle ayant 5 ou 6 atomes de carbone, benzyle ou phényle,

$Y_5$ est de l'hydrogène ou un groupe alkyle ayant 1 à 5 atomes de carbone éventuellement substitué par des radicaux hydroxyle, cyano ou alcoxy ayant 1 à 4 atomes de carbone,

$W_4$ est de l'hydrogène ou désigne ensemble avec $Z_4$ les atomes nécessaires pour compléter un noyau benzénique fixé par condensation,

$Z_4$ est de l'hydrogène, un groupe alkyle ayant 1 à 4 atomes de carbone, alcoxy ayant 1 à 5 atomes de carbone, éventuellement substitué, halogéno, carbalcoxy ayant 2 à 5 atomes de carbone, où $Z_4$ désigne ceux des atomes qui forment ensemble avec $Y_1$ un noyau pipéridine ou morpholine qui est éventuellement substitué par le radical méthyle, et

$Y_4$ a la signification donnée dans la revendication 7.

9. Procédé pour la préparation de composés ayant la formule

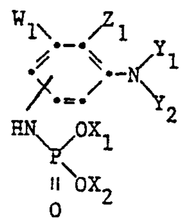

(1)

dans laquelle $X_1$, $X_2$, $Y_1$, $Y_2$, $Z_1$ et $W_1$ ont les significations indiquées dans la revendication 1, caractérisée par le fait qu'on fait réagir des anilines de formule

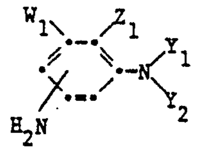

(31)

dans laquelle $Y_1$, $Y_2$, $Z_1$ et $W_1$ ont les significations indiquées dans la revendication 1, avec des phosphites ayant la formule

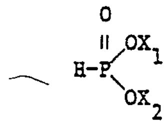

(32)

dans laquelle $X_1$ et $X_2$ ont les significations données dans la revendication 1, en présence d'un catalyseur et d'une base minérale, dans le tétrachlorure de carbone comme solvant, éventuellement en combinaison avec d'autres solvants organiques, à des températures comprises entre 0 °C et 100 °C, et éventuellement sous une atmosphère protectrice.

10. Utilisation des composés selon l'une des revendications 1 à 8 comme copulants pour la préparation de colorants azoïques.